# FASCICULE DE BREVET EUROPEEN

(11) **EP 0 446 548 B1**
(45) Date de publication et mention de la délivrance du brevet: **11.08.1993**
(21) Numéro de dépôt: 90403768.6
(22) Date de dépôt: 26.12.1990
(51) Int. Cl.: F16L 21/04, F16L 21/06

(54) **Dispositif de raccordement et d'étanchéité pour deux tuyaux montés bout à bout**
Vorrichtung zur Verbindung und Abdichtung zweier stumpf aneinanderstossenden Rohre
Device for connecting and sealing two pipes joined end to end

(30) Priorité: 15.03.1990 FR 9003315
(43) Date de publication de la demande: 18.09.1991
(73) Titulaire: SOCIETE ANONYME DE GESTION DES EAUX DE PARIS S.A.G.E.P., F-75014 Paris (FR)
(72) Inventeur: Desbrueres, Pierre, F-94100 Saint Maur des Fosses (FR); Imbert, Dominique, F-75013 Paris (FR); Mazzoni, Michel, F-75016 Paris (FR)
(74) Mandataire: Tanguy, Gilbert André

(56) Documents cités:
- GB-A- 456 914
- GB-A- 493 460
- GB-A- 1 167 220
- US-A- 1 940 729
- US-A- 1 964 642
- US-A- 2 188 302

## Description

L'invention se rapporte à un dispositif de raccordement et d'étanchéité pour deux tuyaux montés bout à bout et concerne plus particulièrement un dispositif de réparation destiné à être adapté à la jonction de raccordement de tels tuyaux pour éliminer une fuite. Le domaine privilégié de l'invention est celui de la distribution de l'eau.

Dans le domaine de la distribution de fluides, comme par exemple un réseau de distribution d'eau, une conduite est constituée de l'assemblage étanche, bout à bout, de tronçons de tuyaux rigides en fonte ou en acier. On distingue essentiellement deux types de tels tuyaux correspondant à deux techniques d'assemblage bout à bout. Les tuyaux dits "à bouts unis" ont des extrémités de même diamètre réunies par une bague externe de raccordement au plomb. Les tuyaux dits "à emboîtement" comportent des extrémités de diamètres différents, permettant de les emboîter bout à bout, l'extrémité de petit diamètre s'engageant dans l'embout de plus grand diamètre du tuyau voisin. Après un certain temps de service, certaines jonctions perdent leur étanchéité. Des fuites plus ou moins importantes peuvent se déclarer. Il est donc nécessaire de surveiller l'état des jonctions des tuyaux sur tout le réseau et de réparer celles qui sont défectueuses. On connaît des dispositifs permettant d'entourer la jonction défectueuse pour colmater la fuite. Ces dispositifs sont coûteux et de mise en oeuvre difficile. En particulier, il est nécessaire, pour les mettre en place, d'arrêter la distribution d'eau pendant une période de temps relativement longue. A titre d'exemple, pour la mise en place d'un tel dispositif classique autour de la jonction de deux tuyaux à bouts unis par une bague au plomb, il est nécessaire d'enlever ladite bague au plomb et de nettoyer les extrémités des tuyaux avant de mettre en place le dispositif d'étanchéité. Ceci nécessite l'interruption de la distribution d'eau pendant au moins une demi-journée.

En cas de fuite entre deux tuyaux à emboîtement, le dispositif est de structure plus complexe et donc plus coûteuse, et sa mise en place nécessite aussi l'interruption de la distribution.

Le document US 1.940.729 décrit un dispositif de raccordement et d'étanchéité entre deux tuyaux rigides.

L'un des buts de l'invention est de proposer un nouveau dispositif de raccordement de ce genre, qui soit de conception simple et peu coûteuse.

Un autre but de l'invention est que ce dispositif soit facile à mettre en place, sans intervention notable sur la jonction défectueuse elle-même et, la plupart du temps, sans qu'il soit nécessaire d'interrompre la distribution du liquide circulant dans le réseau.

Dans cet esprit, l'invention concerne un dispositif de raccordement et d'étanchéité pour deux tuyaux montés bout à bout, du type comprenant
- une bague d'enveloppement ayant une forme et des dimensions adaptées pour recouvrir les extrémités voisines de ces tuyaux, ladite bague d'enveloppement étant constituée d'au moins deux coquilles se raccordant de façon étanche par des bords d'assemblage s'étendant au moins approximativement parallèlement à l'axe des tuyaux raccordés;
- deux joints d'extrémité, chacun de forme et dimensions adaptées pour venir s'appliquer contre la surface externe d'un tuyau et contre une extrémité circulaire de ladite bague d'enveloppement;
- deux anneaux de compression desdits joints, respectivement, de forme et dimensions choisies pour assurer une compression radiale dudit joint contre la surface externe d'un tuyau, chaque anneau étant constitué d'au moins deux éléments assemblés;
- des moyens pour solliciter axialement chaque anneau de compression en direction d'une extrémité voisine de la bague d'enveloppement, le joint d'extrémité correspondant étant intercalé entre ladite extrémité de la bague d'enveloppement et ledit anneau de compression, caractérisé en ce que les moyens pour solliciter axialement chaque anneau de compression en direction d'une extrémité voisine de la bague d'enveloppement, avec interposition du joint d'extrémité correspondant, comprennent un anneau d'ancrage en au moins deux parties, monté serré radialement sur un tuyau précité en un emplacement tel que l'anneau de compression soit intercalé axialement entre ladite extrémité de la bague d'enveloppement et ledit anneau d'ancrage, et une pluralité de vérins répartis circulairement entre ledit anneau d'ancrage et ledit anneau de compression pour repousser ce dernier vers ladite extrémité de la bague d'enveloppement.

La structure envisagée dans le cadre de l'inventionpermet d'éviter toute déformation de l'anneau de compression qui porte le joint d'extrémité.

Les vérins sont avantageusement matérialisés par des vis engagées dans des trous taraudés de chaque anneau d'ancrage, orientées parallèlement à l'axe de celui-ci, les extrémités de ces vis venant prendre appui sur un anneau de compression adjacent.

Ainsi, l'anneau de compression est uniformément poussé axialement sous l'action de ces vis régulièrement réparties circonférentiellement. Il comporte un embrèvement qui abrite le joint d'extrémité correspondant. Cet embrèvement comprend avantageusement une face cylindrique et une face tronconique; en conséquence, le déplacement de l'anneau se traduit à la fois par une compression axiale du joint contre le chant d'extrémité voisin de la bague d'enveloppement et par une compression radiale de ce même joint contre la surface externe du tuyau. Il est à noter enfin que les vérins précités peuvent être répartis le long d'un cercle sensiblement de même diamètre que celui du joint d'extrémité, ce qui réduit les couples de torsion sur les anneaux, principale cause de leurs déformations.

L'invention sera mieux comprise à la lecture de la description qui va suivre de deux modes de réalisation conformes à son principe, donnée uniquement à titre d'exemple et faite en référence aux dessins annexés dans lesquels :
- la figure 1 représente un dispositif conforme à l'invention pour deux tuyaux à bouts unis, le dispositif étant représenté en partie en coupe longitudinale et en partie en vue extérieure;
- la figure 2 est une vue de détail montrant la jonction des deux éléments d'un anneau de compression de la figure 1 ;
- la figure 3 est une vue de détail d'un anneau d'ancrage montrant une charnière;
- la figure 4 est une autre vue de détail de l'anneau d'ancrage au niveau de sa fermeture; et
- la figure 5 est une vue en perspective d'une variante de la bague d'enveloppement convenant plus particulièrement pour deux tuyaux à emboîtement.

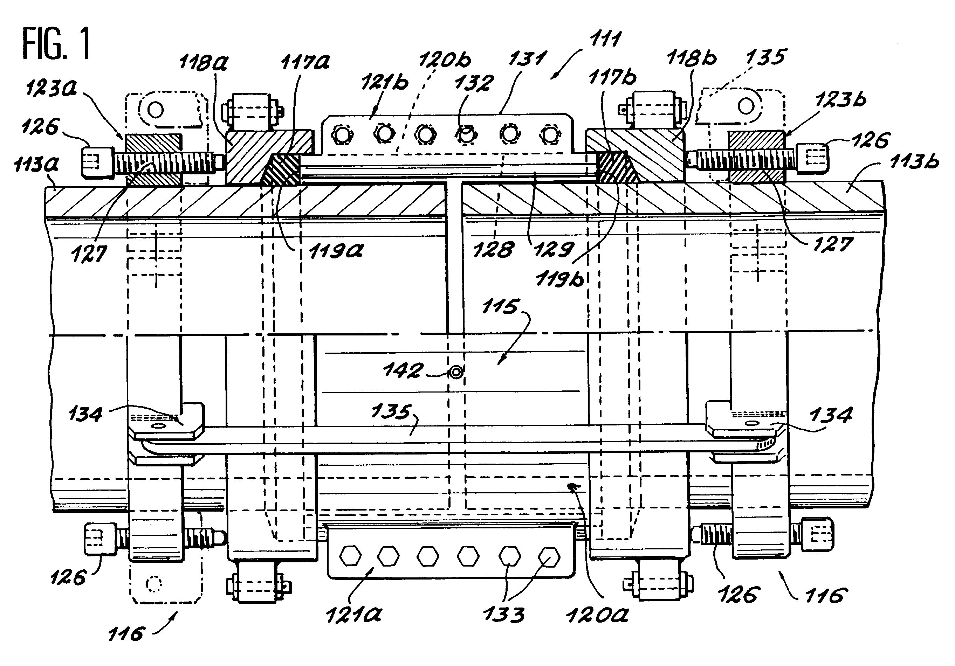

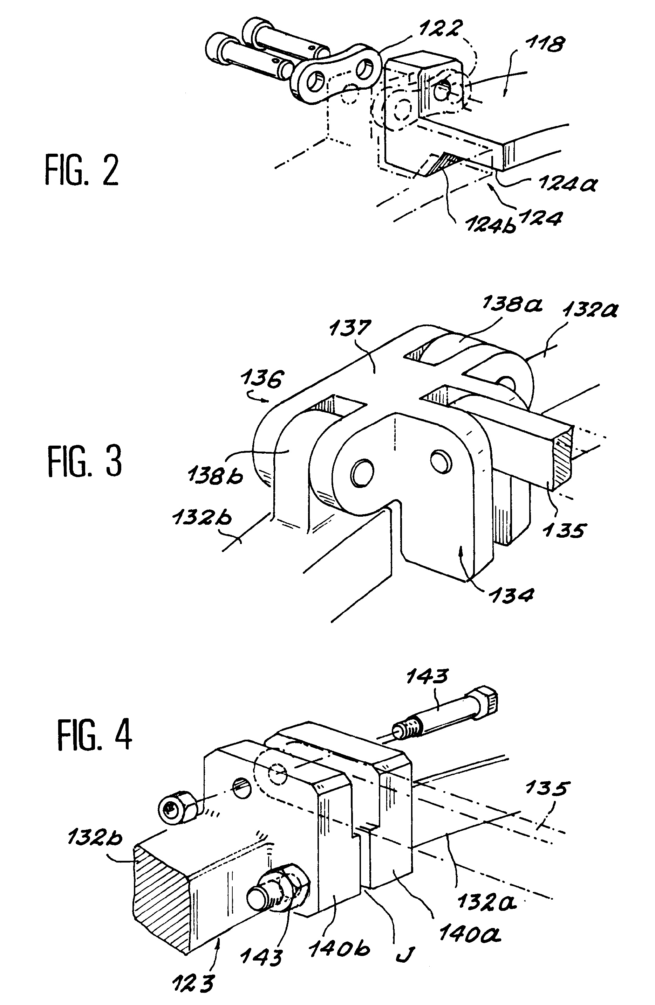

En se reportant plus particulièrement aux figures 1 à 4, on a représenté un dispositif de raccordement et d'étanchéité 111 pour deux tuyaux 113a, 113b dits à "bouts unis". Le dispositif comporte une bague d'enveloppement 115, ici globalement cylindrique, destinée à recouvrir les deux extrémités des deux tuyaux 113a, 113b, deux joints d'extrémité 117a, 117b, annulaires à section carrée ou rectangulaire, deux anneaux de compression 118a, 118b desdits joints, respectivement et des moyens 116 pour solliciter axialement chaque anneau de compression en direction d'un chant d'extrémité circulaire 119a, 119b, respectivement, de la bague d'enveloppement 115. Le joint d'extrémité 117 correspondant est intercalé entre ledit chant d'extrémité et l'anneau de compression. La bague d'enveloppement se compose ici de deux coquilles 120a, 120b, globalement semi-cylindriques se raccordant longitudinalement de façon étanche par des bords d'assemblage 121a, 121b. Chaque anneau de compression 118a, 118b est constitué de deux parties globalement semi-circulaires raccordées par leurs extrémités en regard au moyen d'éléments de montage articulés. Plus précisément chaque élément de montage 122 a la forme d'une attache de maillon de chaîne. Deux éléments de ce genre (Figure 2) sont prévus de part et d'autre des extrémités en regard des deux parties de l'anneau 118 et raccordés à celles-ci par des tourillons transversaux. Chaque anneau de compression 118a ou 118b comporte un embrèvement circulaire 124 dans lequel vient se loger le joint d'extrémité 117a, 117b correspondant. Cet embrèvement comporte une face cylindrique 124a et une face tronconique 124b, de sorte que le simple déplacement axial de l'anneau de compression provoque simultanément la compression axiale et radiale du joint d'extrémité 117. L'anneau de compression lui-même n'est pas serré sur le tuyau.

Les moyens 116 pour solliciter axialement chaque anneau de compression 118a, 118b en direction d'une extrémité voisine de la bague d'enveloppement 115 avec interposition du joint 117 correspondant comprennent un anneau d'ancrage 123a, 123b, respectivement, défini en au moins deux parties de façon à pouvoir être serré radialement sur un tuyau 113 précité en un emplacement tel que l'anneau de compression 118 correspondant soit intercalé axialement entre l'extrémité adjacente de la bague d'enveloppement 115 et ledit anneau d'ancrage, comme cela apparaît clairement sur la figure 1. Chaque anneau d'ancrage 123a, 123b a une section carrée ou rectangulaire. En outre, une pluralité de vérins 126 sont répartis circulairement entre ledit anneau d'ancrage 123 et ledit anneau de compression 118 pour repousser ce dernier vers l'extrémité de la bague d'enveloppement. Ces vérins sont ici simplement matérialisés par des vis engagées dans des trous taraudés 127 de chaque anneau d'ancrage 123a, 123b et orientées parallèlement à l'axe de celui-ci. Les extrémités de ces vis prennent appui sur l'anneau de compression adjacent 118a, 118b, respectivement. Avantageusement, pour les raisons indiquées ci-dessus, les trous taraudés 127 sont répartis le long d'un cercle ayant un diamètre sensiblement égal au diamètre moyen d'un joint d'extrémité 117. Les vis constituant les vérins agissent donc sur l'anneau de compression dans les meilleures conditions possibles et notamment avec un minimum de torsion sur les anneaux. Dans l'exemple, chaque anneau d'ancrage porte vingt quatre vérins, régulièrement répartis circonférentiellement. Chaque bord d'assemblage 121a, 121b comprend une pièce de montage 128, ici rectiligne. L'une d'elles comporte une rainure longitudinale 129, à section carrée ou rectangulaire, conformée pour recevoir un joint d'étanchéité longitudinal 130, cylindrique, non représenté. Celui-ci est comprimé dans sa rainure entre un bord d'assemblage muni de ladite rainure et le bord d'assemblage lui faisant face, n'en comportant pas. Chaque pièce de montage 128 comporte aussi une bride longitudinale 131, ici rectiligne, percée de trous 132 susceptibles de recevoir des boulons 133. Ces derniers sont montés entre les brides longitudinales adjacentes de deux coquilles 120a, 120b. Le joint longitudinal est comprimé lors du serrage des boulons 133.

De plus, chaque anneau d'ancrage 123a, 123b est muni d'une pluralité de chapes 134 ou moyens d'attache analogues auxquels sont raccordés des éléments de stabilisation 135 s'étendant entre les deux anneaux d'ancrage tout autour de la bague d'enveloppement 115. Dans l'exemple représenté, on a prévu six éléments de stabilisation régulièrement répartis circonférentiellement autour de la bague d'enveloppement. Leur rôle est d'éviter le recul de l'un ou l'autre des anneaux d'ancrage au serrage des vérins 126. Un tel élément de stabilisation a ici la forme d'une biellette articulée à chacune de ses extrémités à l'une des chapes 134 de l'un des anneaux 123a, 123b, respectivement. Chaque élément de chape est soudé sur deux faces de l'anneau d'ancrage correspondant, la face cylindrique externe et la face latérale la plus proche de l'anneau de compression. Une découpe à angle droit est prévue à cet effet à la partie de raccordement dudit élément de chape. Ce montage augmente la résistance de l'anneau d'ancrage aux couples de torsion pouvant prendre naissance au serrage des joints d'extrémité. En effet, le prolongement radial 135 (figure 1) de chaque élément de chape s'oppose à la torsion de l'anneau 123.

Chaque anneau d'ancrage 123a, 123b est constitué de deux éléments globalement semi-circulaires 132a, 132b de dimensions telles (notamment leur longueur) qu'ils puissent être assemblés serrés sur l'un des tuyaux. Pour faciliter le montage, deux extrémités en regard de ces éléments sont articulées entre elles par une charnière 136. Une telle charnière (figure 3) est ici simplement constituée d'une double chape centrale 137 articulée à deux "oreilles" 138a, 138b respectivement soudées sur les extrémités des deux éléments 122a, 122b. L'une des chapes 134 est soudée à un élément de cette charnière, plus précisément à ladite double chape 137 de la charnière 136. Les deux autres extrémités en regard de ces éléments 132a, 132b sont pourvues de prolongements latéraux 140a, 140b (figure 4) munis de trous 141 et donc susceptibles d'être assemblés par des boulons 143. C'est le serrage de ces boulons qui assure le montage serré de l'anneau d'ancrage sur la surface externe du tuyau. Pour ce faire, les éléments 132a, 132b sont dimensionnés pour qu'un jeu notable J subsiste en toutes circonstances entre leurs extrémités en regard au voisinage des prolongements latéraux 140a, 140b. Ces derniers sont d'ailleurs conformés et mis à profit pour définir une chape d'articulation d'un élément de stabilisation 135 (figure 4), l'un des boulons 143 lui servant d'axe d'articulation. Ainsi, des éléments de stabilisation 135 sont avantageusement agencés au voisinage des extrémités assemblées des deux éléments constitutifs de chaque anneau d'ancrage. Il ressort de ce qui précède que les deux anneaux d'ancrage et l'ensemble des éléments de stabilisation (sauf celui qui est monté entre les prolongements latéraux 140a, 140b) peuvent être pré-assemblés en atelier, ce qui facilite la mise en oeuvre sur le site.

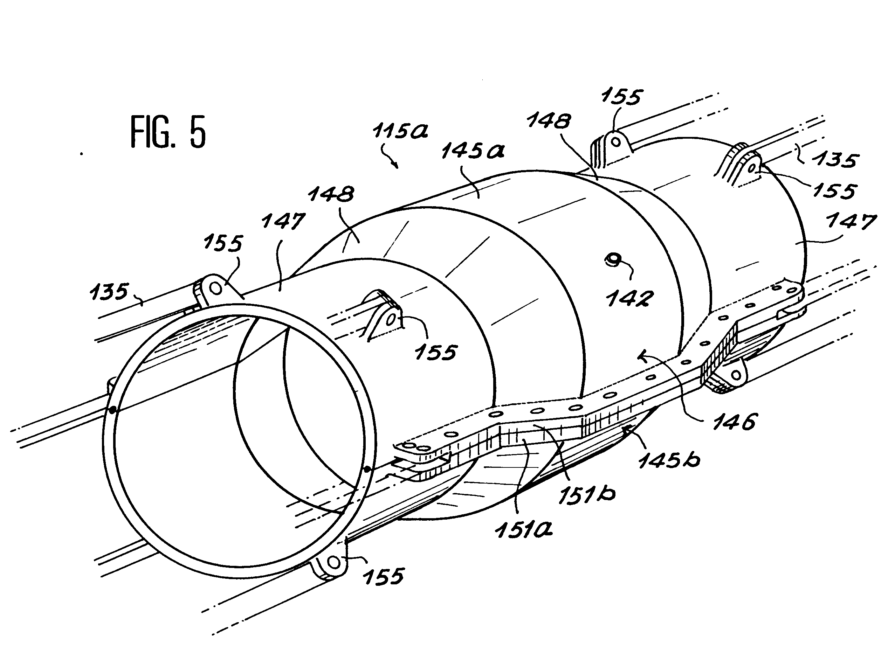

La figure 5 représente une variante de la bague d'enveloppement, notamment pour le raccordement étanche de deux tuyaux à emboîtement (non représentés). Les autres éléments constitutifs du dispositif, à savoir les anneaux de compression, les joints d'extrémités, les anneaux d'ancrage, sont les mêmes que ceux décrits en référence aux figures 1 à 4. La bague d'enveloppement 115a est élargie en son milieu pour abriter soit l'embout d'extrémité élargi de l'un des tuyaux, soit, dans le cas de raccordement de tuyaux à bouts unis, la bague externe avec joint au plomb laissée en l'état. Plus précisément, chaque coquille 145a, 145b comporte une partie médiane élargie et est constituée d'une demi-virole cylindrique 146, centrale, de grand diamètre, raccordée à deux demi-viroles cylindriques 147, extrêmes, de plus petit diamètre, par des demi-viroles tronconiques 148. Les bords d'assemblage 151a, 151b des coquilles ont la même structure que les bords 121a, 121b du mode de réalisation précédent, mais leur forme épouse le contour longitudinal de la bague d'enveloppement 115a. Ils assurent la compression des joints longitudinaux. En outre, des chapes 155 sont solidaires (soudées) des demi-viroles cylindriques 147 des deux coquilles, et situées au voisinage des extrémités de la bague d'enveloppement 115a, pour le raccordement des éléments de stabilisation. Ces chapes ou moyens d'attache analogues sont régulièrement réparties circonférentiellement et leur nombre est égal à celui des chapes portées par les anneaux d'ancrage. Ainsi, chaque anneau d'ancrage est relié par six éléments de stabilisation 135 à des chapes portées par la partie d'extrémité cylindrique correspondante de la bague d'enveloppement. Au voisinage des joints longitudinaux entre les coquilles, les deux éléments d'une chape sont respectivement portés par les deux coquilles.

Dans les deux modes de réalisation décrits ci-dessus, la bague d'enveloppement 115 ou 115a est munie de deux embouts obturables 142 opposés, pour désinfection et remplissage de l'espace défini entre les deux tuyaux, la bague d'enveloppement et les deux joints d'extrémité.

## Revendications

1. Dispositif de raccordement et d'étanchéité pour deux tuyaux montés bout à bout, du type comprenant :
- une bague d'enveloppement ayant une forme et des dimensions adaptées pour recouvrir les extrémités voisines de ces tuyaux, ladite bague d'enveloppement étant constituée d'au moins deux coquilles, se raccordant de façon étanche par des bords d'assemblage s'étendant au moins approximativement parallèlement à l'axe des tuyaux raccordés,
- deux joints d'extrémité, chacun de forme et dimensions adaptées pour venir s'appliquer contre la surface externe d'un tuyau et contre une extrémité circulaire de ladite bague d'enveloppement,
- deux anneaux de compression desdits joints, respectivement, de forme et dimensions choisies pour assurer une compression radiale dudit joint contre la surface externe d'un tuyau, chaque anneau étant constitué d'au moins deux éléments assemblés,
- des moyens pour solliciter axialement chaque anneau de compression en direction d'une extrémité voisine de la bague d'enveloppement, le joint d'extrémité correspondant étant intercalé entre ladite extrémité de la bague d'enveloppement et ledit anneau de compression, caractérisé en ce que les moyens pour solliciter axialement chaque anneau de compression en direction d'une extrémité voisine de la bague d'enveloppement, avec interposition du joint d'extrémité correspondant comprennent un anneau d'ancrage (123a, 123b) en au moins deux parties, monté serré radialement sur un tuyau précité en un emplacement tel que l'anneau de compression soit intercalé axialement entre ladite extrémité de la bague d'enveloppement et ledit anneau d'ancrage, et une pluralité de vérins (126) répartis circulairement entre ledit anneau d'ancrage et ledit anneau de compression pour repousser ce dernier vers ladite extrémité de la bague d'enveloppement.

2. Dispositif selon la revendication 1, caractérisé en ce que lesdits vérins (126) sont matérialisés par des vis engagées dans des trous taraudés (126) de chaque anneau d'ancrage, orientées parallèlement à l'axe de celui-ci, les extrémités de ces vis venant prendre appui sur un anneau de compression adjacent.

3. Dispositif selon la revendication 2, caractérisé en ce que lesdits trous taraudés (127) sont répartis le long d'un cercle ayant un diamètre sensiblement égal au diamètre moyen dudit joint d'extrémité.

4. Dispositif selon l'une des revendications précédentes, caractérisé en ce que, ladite bague d'enveloppement étant constituée de deux coquilles (120a, 120b) globalement semi-cylindriques pour le raccordement étanche de deux tuyaux à bouts unis, chaque anneau d'ancrage est muni d'une pluralité de chapes (132) ou moyens d'attache analogues, auxquels sont raccordés des éléments de stabilisation (135) s'étendant entre les deux anneaux d'ancrage, tout autour de ladite bague d'enveloppement

5. Dispositif selon l'une des revendications 1 à 4, caractérisé en ce que ladite bague d'enveloppement étant constituée de deux coquilles (145a, 145b) comportant chacune une partie médiane élargie, notamment pour le raccordement de deux tuyaux à emboîtement, elle comporte, au voisinage de chacune de ses extrémités, une pluralité de chapes (155)ou moyens d'attache analogues, en ce que chaque anneau d'ancrage est muni d'une pluralité de chapes ou moyens d'attache analogues correspondants et en ce que des éléments de stabilisation (135) sont raccordés entre les chapes de chaque anneau d'ancrage et celles de l'extrémité voisine de la bague d'enveloppement.

6. Dispositif selon la revendication 4 ou 5, caractérisé en ce que lesdits éléments de stabilisation (135) sont en forme de biellettes articulées par leurs extrémités à des chapes précitées.

7. Dispositif selon l'une des revendications 4 à 6, caractérisé en ce que chaque anneau d'ancrage est constitué de deux éléments (132a, 132b) globalement semi-circulaires, dont deux extrémités en regard sont articulées entre elles par une charnière (136) et en ce que l'une des chapes précitées est fixée à un élément de cette charnière.

8. Dispositif selon l'une des revendications 4 à 7, caractérisé en ce que chaque anneau d'ancrage est constitué de deux éléments (132a, 132b) globalement semi-circulaires dont deux extrémités voisines sont pourvues de prolongements latéraux ( 140a, 140b)munis de trous (141) et susceptibles d'être assemblés par des boulons, ces deux extrémités voisines restant éloignées (J) l'une de l'autre après montage sur le tuyau, pour un montage serré dudit anneau d'ancrage sur le tuyau.

9. Dispositif selon la revendication 8, caractérisé en ce que lesdits prolongements latéraux sont conformés pour définir une chape d'articulation de l'un des éléments de stabilisation (135) précités.

10. Dispositif selon l'une des revendications précédentes, caractérisé en ce que chaque anneau de compression est en deux parties globalement semi-circulaires raccordées par leurs extrémités en regard au moyen d'éléments de montage (122) articulés.

11. Dispositif selon la revendication 10, caractérisé en ce qu'un tel élément de montage a la forme d'une attache de maillon de chaîne.

12. Dispositif selon l'une des revendications précédentes, caractérisé en ce que chaque anneau de compression comporte un embrèvement circulaire (124) dans lequel vient se loger le joint d'extrémité (119) correspondant, cet embrèvement comprenant une face cylindrique (124a) et une face tronconique (124b).

13. Dispositif selon l'une des revendications précédentes, caractérisé en ce que chaque coquille de la bague d'enveloppement comporte une pièce de montage (128)le long de chacun de ses bords longitudinaux et que l'une de ces pièces est munie d'une rainure longitudinale (129) conformée pour recevoir un joint d'étanchéité cylindrique.

14. Dispositif selon la revendication 13, caractérisé en ce que ladite pièce de montage comporte une bride longitudinale (131) percée de trous susceptibles de recevoir des boulons ou moyens de fixation analogues, en ce que de tels boulons sont montés entre des brides longitudinales adjacentes de deux coquilles correspondantes, la compression dudit joint étant assurée lors du serrage desdits boulons.

15. Dispositif selon l'une des revendications précédentes, caractérisé en ce que la bague d'enveloppement est munie de deux embouts (142) obturables pour désinfection et remplissage.

## Patentansprüche

1. Anschluß- und Dichtungsvorrichtung für zwei mit den Enden gegeneinander verlegte Rohre, bestehend aus:
- einem in Form und Abmessung zur Überdeckung der benachbarten Rohrenden geeigneten und aus mindestens zwei Schalen bestehenden Bandagierungsring, wobei der dichte Anschluß durch Verbindungskanten erfolgt, die zumindest ungefähr parallel zur Achse der verbundenen Rohre verlaufen,
- zwei Enddichtungen, die von Form und Abmessung her jeweils geeignet sind, an der äußeren Rohrfläche und dem kreisförmigen Ende des Bandagierungsringes anzuliegen,
- zwei Enddichtungs-Abquetschringe, deren Form und Abmessungen jeweils geeignet sind, die Enddichtung radial gegen die äußere Rohrfläche zu drücken, wobei jeder Abquetschring aus mindestens zwei miteinander verbundenen Teilen besteht,
- Mitteln zur axialen Beanspruchung eines jeden Abquetschringes in Richtung eines benachbarten Endes des Bandagierungsringes, wobei die entsprechende Enddichtung sich zwischen dem Ende des Bandagierungsringes und dem Abquetschring befindet, dadurch gekennzeichnet, daß die Mittel zur axialen Beanspruchung eines jeden Abquetschringes in Richtung eines benachbarten Endes des Bandagierungsringes mit Einfügung der entsprechenden Enddichtung einen mindestens zweiteiligen Verankerungsring (123a, 123b) enthalten, der radial fest auf einer geeigneten Stelle eines der Rohre so montiert ist, so daß der Abquetschring axial zwischen dem Ende des Bandagierungsrings und dem Verankerungsring zu liegen kommt, weiterhin dadurch gekennzeichnet, daß zu diesen Mitteln ebenfalls mehrere kreisförmig zwischen dem Verankerungsring und dem Abquetschring angeordnete Zylinder (126) gehören, um den Abquetschring zum Ende des Bandagierungsringes hin zurückzustoßen.

2. Vorrichtung nach Anspruch 1, dadurch gekennzeichnet, daß die Zylinder (126) in die in jeden Verankerungsring geschnittenen Gewindelöcher (127) eingreifende, parallel zur Achse des Verankerungsringes angeordnete Schrauben sind, deren Enden sich auf einen angrenzenden Abquetschring stützen.

3. Vorrichtung nach Anspruch 2, dadurch gekennzeichnet, daß die Gewindelöcher (127) um einen Kreis herum angeordnet sind, dessen Durchmesser etwa gleich dem durchschnittlichen Durchmesser der Enddichtung ist.

4. Vorrichtung nach einem der Ansprüche 1 bis 3, dadurch gekennzeichnet, daß der Bandagierungsring zwecks Dichtigkeit des Anschlusses zweier an den Enden miteinander verbundener Rohre aus zwei insgesamt halbzylinderförmigen Schalen (120a, 120b) besteht und jeder Verankerungsring mit mehreren Gabeln (132) oder ähnlichen Befestigungsmitteln versehen ist, die ihrerseits mit Verstärkungselementen (135) versehen sind, die sich um den gesamten Bandagierungsring herum zwischen den beiden Verankerungsringen erstrecken.

5. Vorrichtung nach einem der Ansprüche 1 bis 4, dadurch gekennzeichnet, daß der Bandagierungsring aus zwei in Sonderheit im Hinblick auf den Anschluß zweier Muffenrohre jeweils in der Mittelpartie erweiterten Schalen (145a, 145b) besteht und in Nähe seiner Enden mit mehreren Gabeln (155) oder ähnlichen Befestigungsmitteln versehen ist, daß jeder Verankerungsring mit mehreren Gabeln oder ähnlichen Befestigungsmitteln versehen ist, und daß zwischen den Gabeln jedes Verankerungsringes und den am benachbarten Ende des Bandagierungsringes befindlichen Gabeln Verstärkungselemente (135) angebracht sind.

6. Vorrichtung nach Anspruch 4 oder 5, dadurch gekennzeichnet, daß die Verstärkungselemente (135) die Form von Hebeln haben, deren Enden an die Gabeln angelenkt sind.

7. Vorrichtung nach einem der Ansprüche 4 bis 6, dadurch gekennzeichnet, daß jeder Verankerungsring aus zwei insgesamt halbkreisförmigen Elementen (132a, 132b) besteht, von denen zwei gegenüberliegende Enden miteinander durch ein Gelenkscharnier (136) verbunden sind, und daß eine der Gabeln an einem Element dieses Scharniers befestigt ist.

8. Vorrichtung nach einem der Ansprüche 4 bis 7, dadurch gekennzeichnet, daß jeder Verankerungsring aus zwei insgesamt halbkreisförmigen Elementen (132a, 132b) besteht, von denen zwei benachbarte Enden mit Löchern (141 ) versehene und durch Bolzen verbindbare seitliche Verlängerungen (140a, 140b) aufweisen, wobei diese beiden benachbarten Enden zwecks Festmontage des Verankerungsringes auf dem Rohr nach der Anbringung am Rohr voneinander einen Abstand (J) halten.

9. Vorrichtung nach Anspruch 8, dadurch gekennzeichnet, daß die seitlichen Verlängerungen so ausgebildet sind, daß sie eine Gelenkgabel eines der Verstärkungselemente (135) bilden.

10. Vorrichtung nach einem der Ansprüche 1 bis 9, dadurch gekennzeichnet, daß jeder Abquetschring aus zwei insgesamt halbkreisförmigen Teilen besteht, deren gegenüberliegende Enden mittels gelenkiger Montageteile (122) verbunden sind.

11. Vorrichtung nach Anspruch 10, dadurch gekennzeichnet, daß die gelenkigen Montageteile (122) die Form einer Kettengliedbefestigung haben.

12. Vorrichtung nach einem der Ansprüche 1 bis 11, dadurch gekennzeichnet, daß jeder Abquetschring mit einer kreisförmigen Kerbe (124) versehen ist, in die sich die jeweils entsprechende Enddichtung (119) einfügt, und daß diese Kerbe je eine zylinderförmige Seite (124a) und eine kegelstumpfförmige Seite (124b) aufweist.

13. Vorrichtung nach einem der Ansprüche 1 bis 12, dadurch gekennzeichnet, daß jede Schale des Bandagierungsringes entlang ihrer Längsränder mit einem Montageteil (128) versehen ist und daß eines dieser Montageteile eine für die Aufnahme eines zylinderförmigen Dichtungsringes ausgebildete Längsnut (129) besitzt.

14. Vorrichtung nach Anspruch 13, dadurch gekennzeichnet, daß das Montageteil (128) mit einem Lochflansch (131 ) versehen ist, dessen Löcher für die Aufnahme von Bolzen oder ähnlichen Befestigungsmitteln geeignet sind, daß diese Bolzen zwischen den benachbarten Längsflanschen zweier einander entsprechender Schalen angebracht wird und das Zusammendrücken des Dichtungsringes beim Anziehen dieser Bolzen gewährleistet ist.

15. Vorrichtung nach einem der Ansprüche 1 bis 14, dadurch gekennzeichnet, daß der Bandagierungsring mit zwei zwecks Desinfizierung und Füllung verschließbaren Endstücken (142) versehen ist.

## Claims

1. Coupling and sealing device for two pipes mounted abutting, of the type comprising :
- one covering ring of suitable shape and dimensions to cover the adjoining ends of these pipes, the said covering ring consisting of at least two shells, coupled and sealed by means of assembly edges extending at least approximately parallel to the axis of the coupled pipes,
- two end seals, each shaped and dimensioned so as to bear against the external surface of a pipe and against one circular end of the said covering ring,
- two compression rings for the said seals, respectively of shape and dimensions chosen to provide radial compression of the said seal against the external surface of a pipe, each ring consisting of at least two assembled elements,
- means for axially urging each compression ring in the direction of a nearby end of the covering ring, with the corresponding end seal interposed between the said end of the covering ring and the said compression ring, characterized in that said means for axially urging each compression ring in the direction of a nearby end of the covering ring, with interposition of the corresponding end seal comprise an anchoring ring (123a, 123b) in at least two parts, mounted tightened radially on one above-mentioned pipe in such a place that the compression ring is wedged axially between the said end of the covering ring and the said anchoring ring, and several screw jacks (126) distributed in a circle between the said anchoring ring and the said compression ring to push this latter towards the said end of the covering ring.

2. Device according to claim 1, characterized in that the said jacks (126) consist of screws inserted into the threaded holes (127) of each anchoring ring, oriented parallel to the axis of this latter, the ends of these screws bearing on an adjacent compression ring.

3. Device according to claim 2, characterized in that the said threaded holes (127) are distributed along a circle having a diameter substantially equal to the average diameter of the said end seal.

4. Device according to one of the above claims, characterized in that, as the said covering ring consists of two generally semi-cyclindrical shells (120a, 120b) to couple and seal two pipes with their ends joined together, each anchoring ring is equipped with several forks (132) or similar means of attachment, to which are connected stabilizer elements (135) extending between the two anchoring rings, all around the said covering ring.

5. Device according to one of claims 1 to 4, characterized in that, as the said casing ring consists of two shells (145a, 145b) each comprising a widened middle section, particularly for coupling two interlocking pipes, it comprises, near to each of its ends, a number of forks (155) or similar attaching means, in that each anchoring ring is equipped with a number of forks or similar corresponding attaching means and in that stabilizing elements (135) are connected between the forks of each anchoring ring and those of the nearby end of the covering ring.

6. Device according to claim 4 or 5, characterized in that the said stabilizing elements (135) are in the form of short rods hinged at their ends onto the above-mentioned forks.

7. Device according to one of claims 4 to 6, characterized in that each anchoring ring consists of two generally semi-circular elements (132an 132b), of which two ends, set face to face, are fastened together by a hinge (136) and that one of the above-mentioned forks is fixed to an element of this hinge.

8. Device according to one of claims 4 to 7, characterized in that each anchoring ring consists of two generally semi-circular elements (132a, 132b) whose two nearby ends are equipped with side extensions (140a, 140b) equipped with holes (141) and able to be assembled by bolts, these two nearby ends remaining at a distance (J) from one another after being mounted onto the pipe to mount the said anchoring ring tightly onto the pipe.

9. Device according to claim 8, characterized in that the said side extensions are shaped to define a hinged fork for one of the above-mentioned stabilizing elements (135).

10. Device according to one of the preceding claims, characterized in that each compression ring is in two generally semi-circular parts coupled by their ends, set face to face, by means of hinged mounting elements (122).

11. Device according to claim 10, characterized in that such a mounting element has the shape of a chain link attachment.

12. Device according to one of the preceding claims, characterized in that each compression ring has a circular rebate (124) into which the corresponding end seal (119) is lodged, this rebate comprising one cylindrical face (124a) and one truncated cone shaped face (124b).

13. Device according to one of the preceding claims, characterized in that each shell of the casing ring comprises one mounting part (128) along each of its longitudinal edges and that one of these parts is equipped with a lengthways slot (129) shaped to receive a cylindrical seal.

14. Device according to claim 13, characterized in that the said mounting part comprises a longitudinal flange (131) pierced with holes suitable to receive bolts or similar fixing means, in that such bolts are mounted between adjacent longitudinal flanges of two corresponding shells, compression of the said seal being achieved by tightening the said bolts.

15. Device according to one of the preceding claims, characterized in that the covering ring is equipped with two end pieces (142) that can be plugged to allow disinfection and filling.
